# NEUE EUROPÄISCHE PATENTSCHRIFT

(11) **EP 1 674 324 B2**
(45) Veröffentlichungstag und Bekanntmachung des Hinweises auf die Entscheidung über den Einspruch: **07.05.2014**
(45) Hinweis auf die Patenterteilung: 09.04.2008
(21) Anmeldenummer: 05021489.9
(22) Anmeldetag: 30.09.2005
(51) Int. Cl.: B60K 35/00, A01B 79/00, A01D 41/127, G02B 27/01

(54) **Landwirtschaftliche Arbeitsmaschine**
Agricultural working machine
Machine de travail agricole

(30) Priorität: 22.12.2004 DE 102004063104
(43) Veröffentlichungstag der Anmeldung: 28.06.2006
(73) Patentinhaber: CLAAS Selbstfahrende Erntemaschinen GmbH, 33428 Harsewinkel (DE)
(72) Erfinder: Hieronymus, Peter, 33758 Schloss Holte-Stukenbrock (DE)
(74) Vertreter: Roth, Klaus

(56) Entgegenhaltungen:
- EP-A1- 0 761 084
- EP-A2- 0 821 296
- DE-A1- 19 705 842
- DE-U1- 20 013 646
- US-A- 5 519 410
- US-A- 5 712 782
- US-A- 5 721 679
- PATENT ABSTRACTS OF JAPAN Bd. 2000, Nr. 02, 29. Februar 2000 (2000-02-29) & JP 11 321383 A (ISEKI & CO LTD), 24. November 1999 (1999-11-24)

## Beschreibung

Die Erfindung betrifft eine landwirtschaftliche Arbeitsmaschine nach dem Oberbegriff des Anspruchs 1.

Aus der DE 40 29 312 ist eine landwirtschaftliche Arbeitsmaschine bekannt geworden, die über eine optische Anzeigevorrichtung verfügt, die Betriebsdaten der landwirtschaftlichen Arbeitsmaschine auf eine Schutzscheibe der Fahrzeugkabine projiziert. Die optische Anzeigevorrichtung ist dabei als so genannte Durchlicht-Flüssigkristall-Anzeigevorrichtung ausgebildet, deren Bildbereich derart außerhalb des Beobachterbereiches des Betreibers der landwirtschaftlichen Arbeitsmaschine liegt, dass nur ein Streulicht des in die Fahrzeugscheibe projizierten Bildes in den Beobachterbereich gelangt. Damit wird vermieden, dass das in die Schutzscheibe projizierte Bild die Sicht des Fährzeugführers auf die Arbeitsorgane, hier das dem Mähdrescher vorgeordnete Schneidwerk, nicht beeinträchtigt wird. Eine derartige Ausführung hat wegen des außerhalb des Beobachterbereiches in die Schutzscheibe projizierten Bildes jedoch den Nachteil, dass der Betreiber der landwirtschaftlichen Arbeitsmaschine zur bewussten Wahrnehmung der Bildinformationen aus dem zu beobachtenden Arbeitsbereich weg auf das projizierte Bild blicken muss. Das bewusste Wahrnehmen der Bildinformation führt damit stets zu einer Abnahme der Beobachtungsfunktion des Fahrers und beansprucht diesen wegen des ständigen Blickwechsels erheblich, sodass wegen der hohen Konzentration schnell Ermüdungserscheinungen des Fahrers einsetzen können.

Weiter ist es beispielsweise aus der WO 89/03059 bekannt, in Automobilen und Flugzeugen so genannte Head-up-Displays zur Anzeige von Informationen in Windschutzscheiben einzusetzen. Derartige Systeme haben jedoch den Nachteil, dass sie ausschließlich als Anzeigeneinheit eingesetzt werden und wegen ihrer technisch anspruchsvollen Struktur sehr kostenintensiv sind.

Ein gattungsgemäßer Stand der Technik ist durch US 5 721 679 gegeben. Weiterer relevanter Stand der Technik wird in den Druckschriften EP 0 761 084 A1 und EP 0821 296 A2 beschrieben.

Es ist deshalb Aufgabe der Erfindung, die beschriebenen Nachteile des Standes der Technik zu vermeiden und insbesondere eine optische Anzeigevorrichtung für landwirtschaftliche Arbeitsmaschinen zu schaffen, die eine optimale Informationseinblendung in den Sichtbereich eines Betreibers der landwirtschaftlichen Arbeitsmaschine ermöglicht und auf kostengünstige Weise in bestehende Datengenerierungssysteme integrierbar ist.

Diese Aufgabe wird erfindungsgemäß durch die kennzeichnenden Merkmale des Anspruchs 1 gelöst.

Indem die optische Anzeigevorrichtung als Head-up-Display ausgeführt ist und die der landwirtschaftlichen Arbeitsmaschine zugeordnete Steuer- und Auswerteinheit aus den Positionsdaten der zumindest einen Positionsortungsvorrichtung und/oder den Informationssignalen eines oder mehrerer Sensoren Informationssignale zur Ansteuerung des Head-up-Displays generiert wird eine Anzeigevorrichtung geschaffen, die kostengünstig in bestehende Datengenerierungssysteme einer landwirtschaftlichen Arbeitsmaschine integrierbar ist.

In vorteilhafter Weiterbildung der Erfindung ist das von dem Head-up-Display generierte Bild im Sichtbereich des Betreibers der landwirtschaftlichen Arbeitsmaschine in einer Sichtscheibe der Fahrerkabine angeordnet, sodass der Betreiber, ohne seinen Sichtbereich zu ändern, bewusst die Informationen der optischen Anzeigevorrichtung wahrnehmen kann.

Eine besonders vorteilhafte Ausgestaltung der Erfindung ergibt sich dann, wenn das von dem Head-up-Display generierte Bild in einem, den visuell zu verfolgenden Arbeitsbereich des Betreibers umfassenden Sichtbereich angeordnet ist, sodass der Betreiber der landwirtschaftlichen Arbeitsmaschine permanent die in dem Bild angezeigten Informationen bewusst wahrnimmt.

In Abhängigkeit von der Art der landwirtschaftlichen Arbeitsmaschine und den adaptierten Anbaugeräten kann sich der visuell durch den Betreiber der landwirtschaftlichen Arbeitsmaschine zu verfolgende Arbeitsbereich ändern. Eine besonders vorteilhafte Ausgestaltung der Erfindung wird in diesem Zusammenhang dann erreicht, wenn die Position des von dem Head-up-Display generierten Bildes in der Sichtscheibe der Fahrerkabine an die Position des durch den Betreiber der landwirtschaftlichen Arbeitsmaschine visuell zu verfolgenden Arbeitsbereichs anpassbar ist, das heißt, das von dem Head-up-Display generierte Bild auf der Sichtscheibe der Fahrerkabine in den jeweiligen Arbeitsbereich wandern kann.

Damit das Auge des Betreibers der landwirtschaftlichen Arbeitsmaschine, biologisch bedingt, nicht ständig zwischen Nah- und Fernsicht "umschalten" muss, ist in einer weiteren vorteilhaften Ausgestaltung vorgesehen, dass von dem Head-up-Display generierte Bild so in die jeweilige Sichtscheibe der Fahrerkabine zu projizieren, dass es virtuell als vor der landwirtschaftlichen Arbeitsmaschine in dem zu beobachtenden Arbeitsbereich liegend wahrgenommen wird.

Ein breites Einsatzspektrum und eine hohe Flexibilität in der Informationsbereitstellung des von dem Head-up-Display generierten Bildes werden dann erreicht, wenn das generierte Bild globale Informationen und/oder Informationen einer momentan angesteuerten Arbeitsebene umfasst und deren Visualisierung selbsttätig erfolgt.

In vorteilhafter Weiterbildung der Erfindung können die globalen Informationen Warnhinweise bezüglich kritischer Betriebszustände der landwirtschaftlichen Arbeitsmaschine und Sollwertüberschreitungen und Sollwertunterschreitung von Parametern der landwirtschaftlichen Arbeitsmaschine und des Erntegutes umfassen. Auf diese Weise ist sichergestellt, dass der Betreiber der landwirtschaftlichen Arbeitsmaschine unmittelbar über mögliche Gefahrensituationen oder einen uneffektiven Betrieb der landwirtschaftlichen Arbeitsmaschine informiert wird, ohne dass er hierfür separate Überwachungsinstrumente verfolgen muss. Die gleichen Effekte treten auf, wenn die eingeblendeten Informationen einer momentan angesteuerten Arbeitsebene die menügeführte Einstellung von Arbeitsorganen der landwirtschaftlichen Arbeitsmaschine, die Überwachung von Effizienzkennwerten und die Positionsanzeige der landwirtschaftlichen Arbeitsmaschine umfassen.

Ein besonders effizienter Einsatz des Head-up-Displays ergibt sich dann, wenn eine Vielzahl von landwirtschaftlichen Arbeitsmaschinen im Verbund arbeiten und die globalen Informationen und/oder die Informationen einer momentan angesteuerten Arbeitsebene aufeinander bezogene Informationen umfassen.

Eine konstruktive einfache Ausgestaltung der Erfindung ergibt sich, wenn die Positionsortungsvorrichtung als GPS-Ortungsvorrichtung und/oder als Laser- oder Infrarotortungsvorrichtung ausgebildet ist.

Indem das Head-up-Display über eine Steuer- und Auswerteinheit mit einer GPS-Ortungsvorrichtung gekoppelt ist und die Steuer- und Auswerteinheit die Position der landwirtschaftlichen Arbeitsmaschine mit in dem zu bearbeitenden Territorium vorhandenen Fahrspuren vergleicht und in dem von dem Head-up-Display generierten Bild eine optimierte Einfahrt in die jeweilige Fahrspur angezeigt wird, kann eine erhebliche Entlastung des Betreibers beim Führen der landwirtschaftlichen Arbeitsmaschine in bereits vorhandenen Fahrspuren erreicht werden.

In einer weiteren vorteilhaften Ausgestaltung der Erfindung kann das Head-up-Display über eine Steuer- und Auswerteinheit mit einer GPS-Ortungsvorrichtung gekoppelt sein, wobei die Steuer- und Auswerteinheit die Position der landwirtschaftlichen Arbeitsmaschine mit den Fahrtrouten eines Routenplanungssystems vergleicht und in dem von dem Head-up-Display generierten Bild Informationen zur Abarbeitung der Fahrtrouten des Routeriplanungssystems angezeigt werden. Dies führt ebenfalls zu einer erheblichen Entlastung des Betreibers, da diesem nunmehr unmittelbar in seinen Sichtbereich die Reihenfolge der abzuarbeitenden Fahrtrouten eingeblendet wird, sodass die Überwachung eines separaten Routenplanungssystems entbehrlich wird.

Eine besonders effiziente Führung von Anbaugeräten wird dann erreicht, wenn das Head-up-Display über eine Steuer- und Auswerteinheit mit einer Positionsortungsvorrichtung gekoppelt ist, die die Position an der landwirtschaftlichen Arbeitsmaschine adaptierter Anbaugeräte überwacht und in dem von dem Head-up-Display generierten Bild eine Ausrichtmarkierung angezeigt wird, die zur optimierten Ausrichtung des Anbaugerätes von dem Betreiber der landwirtschaftlichen Arbeitsmaschine mit einem Bereich des Anbaugerätes in Übereinstimmung gebracht werden muss. Eine bevorzugte Anwendung dieser vorteilhaften Ausgestaltung bildet das Führen von an Mähdreschern adaptierten Schneidwerken an so genannten Erntegutbestandskanten.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Seitenansicht einer als Mähdrescher ausgeführten landwirtschaftlichen Arbeitsmaschine mit Head-up-Display
- Figur 2: eine Detailansicht des Head-up-Displays
- Figur 3: eine Detailansicht des von dem Head-up-Display generierten Bildes
- Figur 4: einen Verbund von landwirtschaftlichen Arbeitsmaschinen mit Head-up-Display
- Figur 5: die graphische Gestaltung des von dem Head-up-Display generierten Bildes
- Figur 6: eine weitere Ausgestaltung des von dem Head-up-Display generierten Bildes

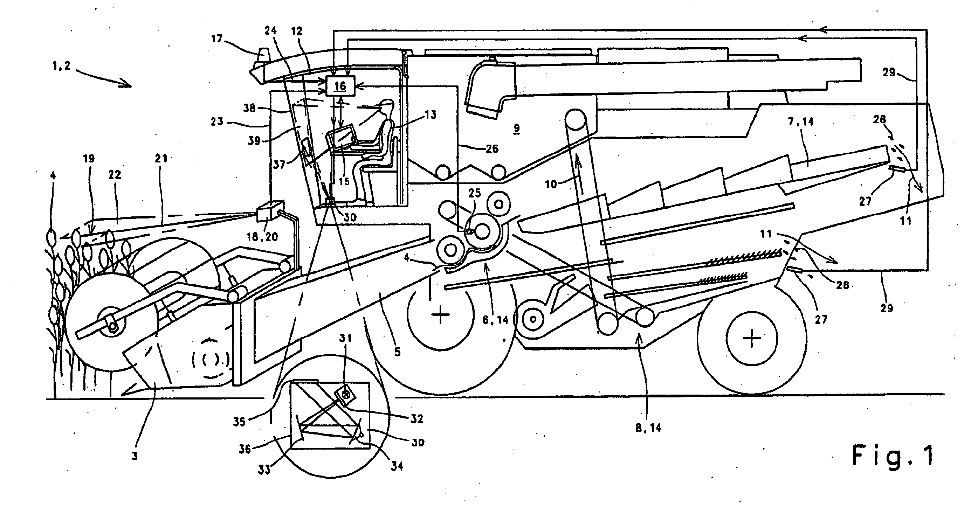

Figur 1 zeigt eine als Mähdrescher 2 ausgeführte landwirtschaftliche Arbeitsmaschine 1 die in ihrem frontseitigen Bereich ein Getreideschneidwerk 3 aufnimmt, welches das auf dem Feld stehende Erntegut 4 aberntet und in seinem rückwärtigen Bereich an einen Schrägförderer 5 übergibt. In an sich bekannter Weise wird das Erntegut 4 von dem Schrägförderer 5 an Dreschorgane 6 übergeben, die im Zusammenwirken mit zumindest einer Trenneinrichtung 7 und einer Reinigungseinrichtung 8 das Erntegut 4 in einen in der Regel in einem Korntank 9 zwischenspeicherbaren Körnerstrom 10 und einen im rückwärtigen Bereich des Mähdreschers 2 aus diesem austretenden Restgutstrom 11 aufteilt. Der Mähdrescher 2 verfügt zudem über eine Fahrerkabine 12 von wo der Betreiber 13 die landwirtschaftliche Arbeitsmaschine 1 und deren Arbeitsorgane 14 steuert.

Hierfür verfügt die landwirtschaftliche Arbeitsmaschine 1 in der Regel über eine Eingabe- und Anzeigeeinheit 15, die mit einer noch näher zu beschreibenden Steuerund Auswerteinheit 16 gekoppelt ist. In dem dargestellten Ausführungsbeispiel verfügt der Mähdrescher 2 zudem über eine an sich bekannte GPS-Ortungsvorrichtung 17 und wahlweise oder zugleich über eine weitere, ebenfalls an sich bekannte Ortungsvorrichtung 18 zur Ermittlung von Bestandskanten 19, die sich am Übergang zwischen bereits abgeerntetem und noch stehendem Erntegut 4 ausbilden. Derartige Ortungsvorrichtungen 18 sind in der Regel als Laser- oder Infrarotsensoren 20 ausgebildet, deren Abtaststrahlen 21 einen so genannten Scannbereich 22 periodisch durchlaufen und dabei ein bestandkantenproportionales Signal 23 generieren, welches an die Steuer- und Auswerteinheit 16 übergeben wird. Die GPS-Ortungsvorrichtung 17 generiert demgegenüber Positionssignale 24 der landwirtschaftlichen Arbeitsmaschine 1 die ebenfalls an die Steuer- und Auswerteinheit 16 übermittelt werden. Im dargestellten Ausführungsbeispiel sind den Dreschorganen 6 zudem Drehzahlsensoren 25 zugeordnet, die ein der Drehzahl der jeweiligen Dreschtrommel proportionales Drehzahlsignal 26 generieren, welches ebenfalls an die Steuer- und Auswerteinheit 16 übermittelt wird. Den im rückwärtigen Bereich des Mähdreschers 2 aus diesem austretenden Gutströmen 11 sind zudem so genannte Kornverlustsensoren 27 zugeordnet, die dem Restkornanteil 28 proportionale Kornverlustsignale 29 generieren, welche ebenfalls an die Steuer- und Auswerteinheit 16 übergeben werden. Es liegt im Rahmen der Erfindung, über die beschriebenen Sensoren 25, 27 hinaus beliebige Sensoren zur Sensierung von Parametern des Erntegutes und der Arbeitsorgane 14 einzusetzen. In der Steuerund Auswerteinheit 16 sind verschiedene Algorithmen hinterlegt, die aus den an die Steuer- und Auswerteinheit 16 übergebenen Signalen 23, 24, 26, 29 verschiedene, noch näher zu beschreibende Erntegutparameter und Betriebsparameter der Arbeitsorgane 14 ableiten und in der Eingabe- und Anzeigeeinheit 15 visualisieren. In der Regel ist die Eingabe- und Anzeigeeinheit 15 so ausgeführt, dass die Erntegutund Betriebsparameter auch unmittelbar geändert werden können.

In erfindungsgemäßer Weise ist der Fahrerkabine 12 zudem ein Head-up-Display 30 zugeordnet, welches in an sich bekannter Weise mittels Lichtquelle 31 auf einem Display 32 ein beliebig gestaltetes Bild generiert, welches dann über ein System aus ortsfestem Spiegel 33 und schwenkbeweglichem Spiegel 34 durch ein Deckglas 35 des Head-up-Display-Gehäuses 36 ein noch näher zu beschreibendes Bild 37 auf eine Sichtscheibe 38 der Fahrerkabine 12 projiziert, wobei das projizierte Bild 37 im Sichtbereich 39 des Betreibers 13 der landwirtschaftlichen Arbeitsmaschine 1 liegt.

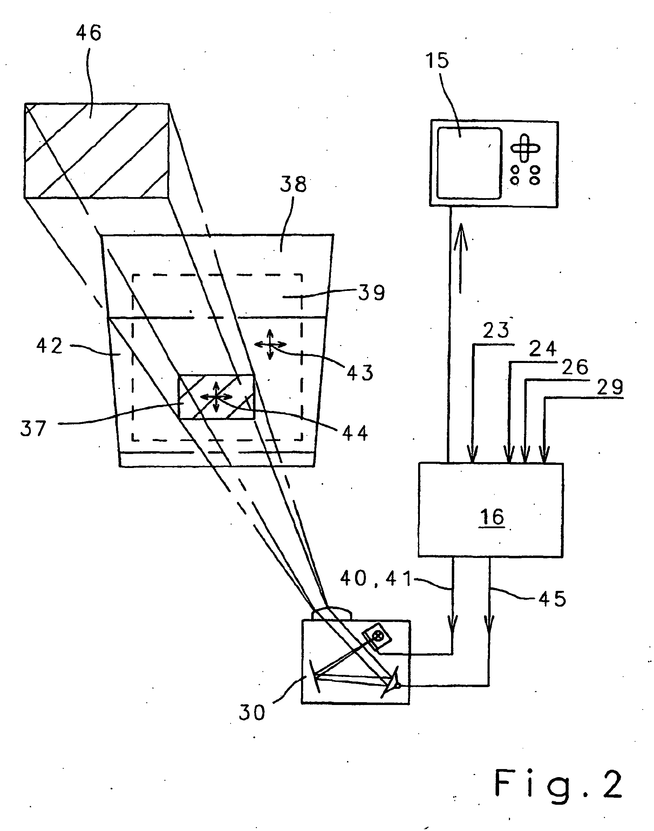

Gemäß Figur 2 sind die Steuer- und Auswerteinheit 16 und das Head-up-Display 30 signaltechnisch miteinander verbunden, sodass in der Steuer- und Auswerteinheit 16 aus den bereits beschriebenen Eingangssignalen 23, 24, 26, 29 generierte Positionsdaten 40 oder verschiedene Erntegutparameter und/oder Betriebsparameter der Arbeitsorgane 14 der landwirtschaftlichen Arbeitsmaschine 1 umfassende Informationssignale 41 an das Head-up.Display 30 übertragbar sind. Während der Sichtbereich 39 des Betreibers 13 des Mähdreschers 2 die gesamte fronseitige Sichtscheibe 38 oder mehrere Sichtscheiben 38 der Fahrerkabine 12 umfassen kann, beschränkt sich die Beobachtungsfunktion des Betreibers 13 beim Einsatz des Mähdreschers 2 im Ernteprozess häufig auf die visuelle Überwachung des Gutannahmeprozesses im Getreideschneidwerk 3 und gelegentlich eine in Fahrtrichtung gerichtete Orientierung im Gelände. In diesen Fällen kann der Sichtbereich 39 auf einen Arbeitsbereich 42 beschränkt sein, wobei dann in erfindungsgemäßer Weise das von dem Head-up-Display 30 generierte Bild 37 in diesem Arbeitsbereich 42 angeordnet ist. Da sich die Position des Arbeitsbereiches 42 beispielsweise bei Verwendung des Head-up-Displays 30 in als Schlepper ausgeführten landwirtschaftlichen Arbeitsmaschinen 1 in Abhängigkeit von den adaptierten Anbaugeräten erheblich ändern kann, ist in einer vorteilhaften Ausgestaltung der Erfindung vorgesehen, dass das von dem Head-up-Display 30 generierte Bild 37 in seiner Lage 44 an eine sich ändernde Lage 43 des Arbeitsbereiches 42 anpassbar ist. Im einfachsten Fall kann diese Lageänderung 43, 44 durch ein Steuersignal 45 bewirkt werden, welches entweder selbsttätig in der Steuer- und Auswerteinheit 16 generiert oder von dem Betreiber 13 über die Eingabe- und Anzeigeeinheit 15 eingegeben wird.

In an sich bekannter Weise kann das Head-up-Display 30 so beschaffen sein, dass das in die Sichtscheibe 38 projizierte Bild 37 für den Betreiber 13 als vor der landwirtschaftlichen Arbeitsmaschine 1 liegendes virtuelles Bild 46 wahrgenommen wird. Dies hat den Vorteil, dass das Auge des Betreibers 13 nicht ständig zwischen einem Nahsichtbereich, der Sichtscheibe 38, und einem Fernsichtbereich, beispielsweise der Position des zu beobachtenden Getreideschneidwerks 3 "umschalten" muss.

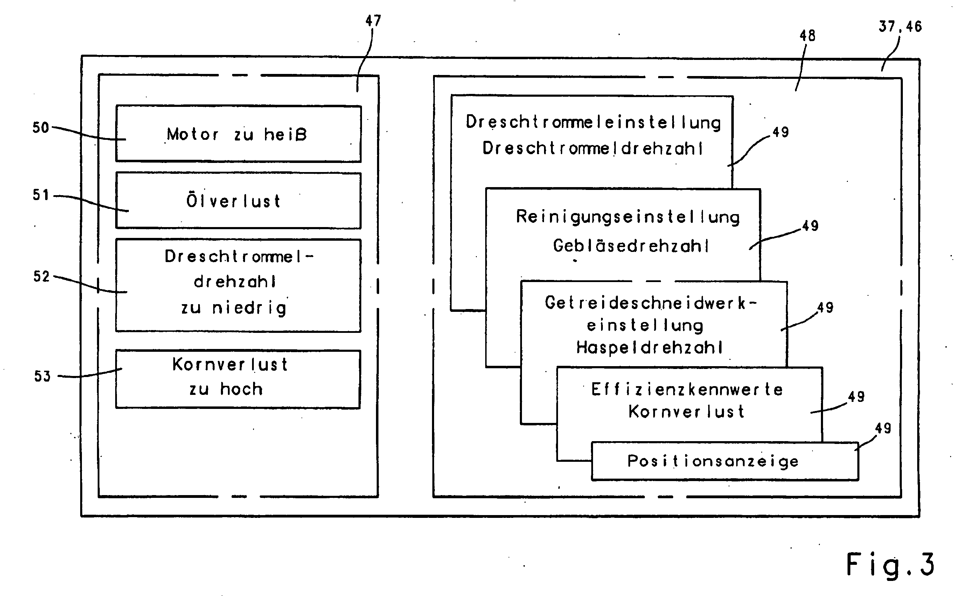

Gemäß Figur 3 kann das von dem Head-up-Display erzeugte Bild 37, 46 so aufgebaut sein, dass es sowohl globale Informationen 47 als auch Informationen 48 einer momentan angesteuerten Arbeitsebene 49 umfasst. Im einfachsten Fall umfassen die globalen Informationen 47 Warnhinweise bezüglich der Motortemperatur 50 und der verschiedenen Ölfüllstände 51 der landwirtschaftlichen Arbeitsmaschine 1. Ferner können die globalen Informationen 47 Sollwertüberschreitungen 53 und -unterschreitungen 52 von Parametern der landwirtschaftlichen Arbeitsmaschine 1 und der Erntegutströme 4, 11, wie etwa den Kornverlust 53 oder die Unterschreitung einer Mindestdreschtrommeldrehzahl 52 umfassen. Es liegt im Rahmen der Erfindung, dass die als Warnhinweise ausgebildeten globalen Informationen 47 nur dann angezeigt werden, wenn die jeweils kritischen Zustände eintreten. In der Regel ist es so, dass die Parameter der Arbeitsorgane 14 und des Getreideschneidwerks 3 über die Eingabe- und Anzeigeeinheit 15 und die mit ihr gekoppelte Steuer- und Auswerteinheit 16 eingestellt werden, wobei je nachdem welche Parameter eingestellt werden sollen verschiedene so genannte Arbeitsebenen 49 angewählt werden können. Erfindungsgemäß kann nun in dem von dem Head-up-Display generierten Bild 37, 46 jeweils die momentan ausgewählte Arbeitsebene 49 und die damit verbundenen Informationen 48 angezeigt werden. Bezüglich der Einstellung der Parameter der Arbeitsorgane 14 können dies beispielsweise die Parameter zur Einstellung der Dreschorgane 6, der Reinigungseinrichtung 8 oder des Getreideschneidwerks 3 sein. Weiter können die anwählbaren Arbeitsebenen 49 die Anzeige von Effizienzkennwerten, wie dem Kornverlust, oder die Positionsanzeige der landwirtschaftlichen Arbeitsmaschine 1 umfassen.

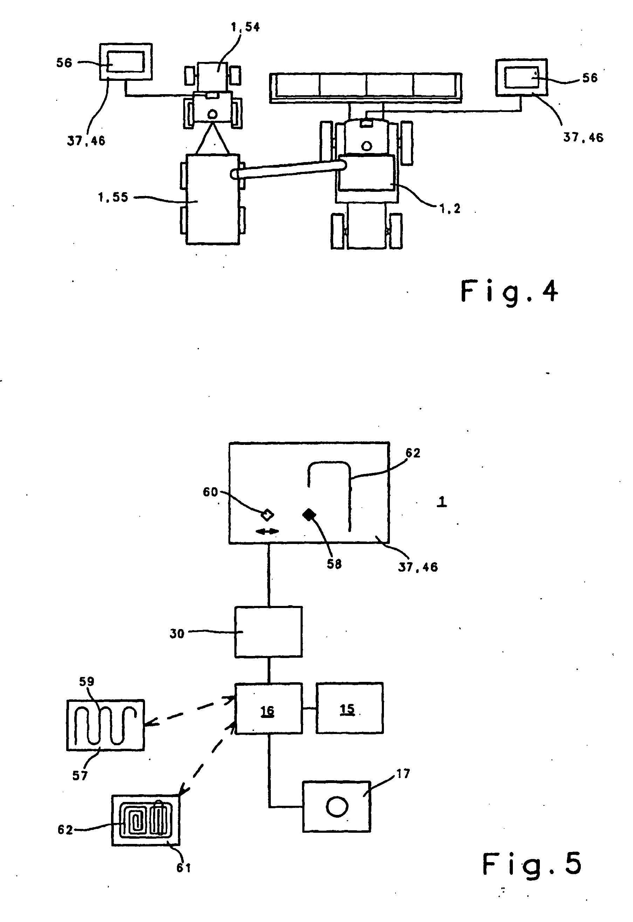

In einer weiteren vorteilhaften Ausgestaltung der Erfindung können gemäß Figur 4 jeweils mehrere landwirtschaftliche Arbeitsmaschinen 1, hier ein Mähdrescher 2 und ein Schlepper 54 mit Hänger 55, über jeweils ein erfindungsgemäßes Head-up-Display 30 aufeinander bezogene Informationen 56 in den projizierten Bildern 37, 46 erhalten. Beispielhaft sei hier die wechselweise Übermittlung der Position der jeweiligen landwirtschaftlichen Arbeitsmaschine 1 angeführt. Eine solche Ausführung hat insbesondere den Vorteil, dass die jeweiligen Betreiber 13 der landwirtschaftlichen Arbeitsmaschinen zur Beobachtung des Erntegutüberladeprozesses nicht mehr den Blick aus ihrer Fahrtrichtung auf die jeweils andere Arbeitsmaschine lenken müssen. In diesem Zusammenhang liegt es im Rahmen der Erfindung, dass die landwirtschaftliche Arbeitsmaschine 1 auch als so genannter Feldhäcksler ausgeführt sein kann, der mittels einer Überladeeinrichtung das geerntete Gut auf die Schlepper-Hänger-Kombination 54, 55 fördert.

Gemäß Figur 5 kann an die der landwirtschaftlichen Arbeitsmaschine 1 zugeordneten Steuer- und Auswerteinheit 16 ein so genannter Fahrspurenplan 57 übergeben werden oder in ihr hinterlegt sein. Indem die GPS-Ortungsvorrichtung 17 die genaue Position der landwirtschaftlichen Arbeitsmaschine 1 bestimmt, können in dem von dem Head-up-Display 30 generierten Bild 37, 46 ein Marker 58 für die optimale Einfahrposition in die jeweilige Fahrspur 59 und ein weiterer, die momentane Position der landwirtschaftlichen Arbeitsmaschine 1 repräsentierender Marker 60 angezeigt werden. Damit wird der Betreiber 13 in die Lage versetzt, die landwirtschaftliche Arbeitsmaschine 1 so zu lenken, dass eine optimale Einfahrt in die jeweilige Fahrspur 59 möglich wird. Dies ist im dargestellten Ausführungsbeispiel genau dann der Fall, wenn die Position der beiden Marker 58, 60 nahezu deckungsgleich ist.

In analoger Weise kann die Steuer- und Auswerteinheit 16 auch mit einem zentralen oder auf der landwirtschaftlichen Arbeitsmaschine 1 angeordneten an sich bekannten Routenplanungssystem 61 gekoppelt sein. Zur Erleichterung der Abarbeitung des Routenplanes 61 können in dem von dem Head-up-Display 30 generierten Bild 37, 46 wieder zwei Marker 58, 60 abgebildet sein, wovon der eine Marker 58 die Position der Fahrtroute 61 und der weitere Marker 60 die momentane Position der landwirtschaftlichen Arbeitsmaschine 1 definiert. Im Fall der Deckungsgleichheit beider Marker 58, 60 bewegt sich die landwirtschaftliche Arbeitsmaschine 1 unmittelbar auf der zuvor ermittelten Fahrtroute 62. Es liegt im Rahmen der Erfindung, dass die jeweilige Fahrtroute 62 auch unmittelbar in dem Bild 37, 46 angezeigt wird.

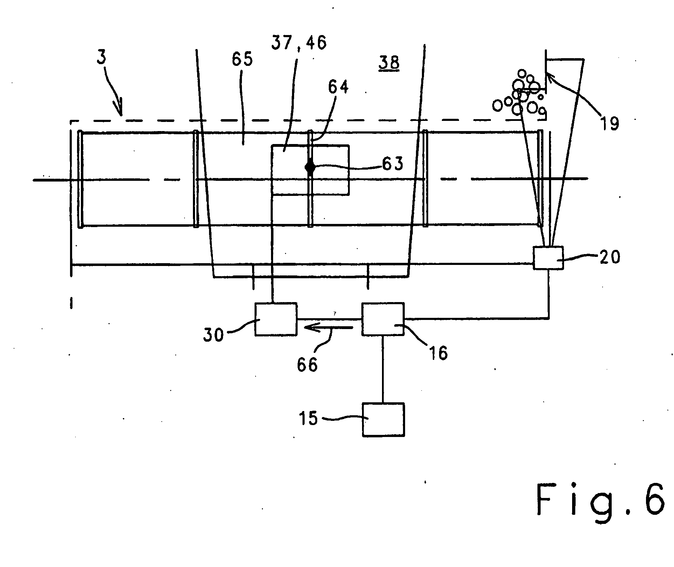

In Figur 6 ist eine weitere Ausgestaltung der Erfindung schematisch dargestellt. Hier ist in dem von dem Head-up-Display 30 generierten Bild 37, 46 eine Ausrichtmarkierung 63 angezeigt, die von dem Betreiber 13 eines Mähdreschers 2 mit dem mittigen Haspelstern 64 der Haspel 65 des Getreideschneidwerks 3 in Übereinstimmung gebracht werden muss. Ist dies, wie in der Figur 6 dargestellt, der Fall, dann wird das Getreideschneidwerk 3 unmittelbar an der Bestandskante 19 unter Auslastung der vollen Arbeitsbreite geführt. Die Position der Ausrichtmarkierung 63 kann beispielsweise dadurch bestimmt werden, dass eine dem Getreideschneidwerk **3** zugeordnete Laser- oder Infrarotortungsvorrichtung 20 mit der Steuer- und Auswerteinheit 16 gekoppelt ist und in dieser ein auf die Arbeitsbreite des Getreideschneidwerks 3 bezogenes Positionssignale 66 für die von dem Head-up-Display erzeugte Ausrichtmarkierung 63 generiert wird.

Es liegt im Rahmen des Könnens eines Fachmanns das beschriebene Head-up-Display 30 in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen.

### Bezugszeichenliste:

- 1: landwirtschaftliche Arbeitsmaschine
- 2: Mähdrescher
- 3: Getreideschneidwerk
- 4: Erntegut
- 5: Schrägförderer
- 6: Dreschorgane
- 7: Trenneinrichtung
- 8: Reinigungseinrichtung
- 9: Korntank
- 10: Körnerstrom
- 11: Restgutstrom
- 12: Fahrerkabine
- 13: Betreiber
- 14: Arbeitsorgane
- 15: Eingabe- und Anzeigeeinheit
- 16: Steuer- und Auswerteinheit
- 17: GPS-Ortungsvorrichtung
- 18: Bestandskantenortungsvorrichtung
- 19: Bestandskante
- 20: Laser- oder Infrarotsensor
- 21: Abtaststrahl
- 22: Scannbereich
- 23: Bestandskantensignal
- 24: Positionssignal
- 25: Drehzahlsensor
- 26: Drehzahlsignal
- 27: Kornverlustsensor
- 28: Restkornanteil
- 29: Kornverlustsignal
- 30: Head-up-Display
- 31: Lichtquelle
- 32: Display
- 33: ortsfester Spiegel
- 34: schwenkbeweglicher Spiegel
- 35: Deckglas
- 36: Head-up-Display-Gehäuse
- 37: Bild
- 38: Sichtscheibe
- 39: Sichtbereich
- 40: Positionsdaten
- 41: Informationssignal
- 42: Arbeitsbereich
- 43: Lageänderung
- 44: Lageänderung
- 45: Steuersignal
- 46: virtuelles Bild
- 47: globale Informationen
- 48: Informationen
- 49: Arbeitsebene
- 50: Motortemperatur
- 51: Ölfüllstände
- 52: Sollwertunterschreitung
- 53: Sollwertüberschreitung
- 54: Schlepper
- 55: Hänger
- 56: bezogene Informationen
- 57: Fahrspurenplan
- 58: Marker
- 59: Fahrspur
- 60: Marker
- 61: Routenplanungssystem
- 62: Fahrtroute
- 63: Ausrichtungsmarkierung
- 64: Haspelstern
- 65: Haspel
- 66: Positionssignal

## Patentansprüche

1. Landwirtschaftliche Arbeitsmaschine (1) mit einer Steuer- und Auswerteinheit (16) die mit zumindest einer Positionsortungsvorrichtung (17, 20), die die Positionsdaten (23, 24) der landwirtschaftlichen Arbeitsmaschine und/oder Positionsdaten des die landwirtschaftliche Arbeitsmaschine umgebenden Geländes erfasst und einem oder mehreren Sensoren (25, 27) zur Generierung von Informationssignalen (26, 29) bezüglich der Ermittlung von Erntegut- und/oder Betriebsparametern der landwirtschaftlichen Arbeitsmaschine in Wirkverbindung steht und wobei der landwirtschaftlichen Arbeitsmaschine zumindest eine optische Anzeigevorrichtung (30) zur Projizierung eines Bildes in eine Sichtscheibe (38) der Fahrerkabine zugeordnet ist, wobei die optische Anzeigevorrichtung als Head-up-Display (30) ausgeführt ist und die Steuer- und Auswerteinheit aus den Positionsdaten der zumindest einen Positionsortungsvorrichtung und den Informationssignalen eines oder mehrerer Sensoren Informationssignale zur Ansteuerung des Head-up-Displays generiert, **dadurch gekennzeichnet, dass** in dem von dem Head-up-Display generierten Bild (37) zwei Marker (58, 60) abgebildet sind, wovon der eine Marker (58) die Position der Fahrtroute (61) eines Routenplanes und der weitere Marker (60) die momentane Position der landwirtschaftlichen Arbeitsmaschine definiert und dass auch die jeweilige Fahrtroute (62) unmittelbar in dem Bild (37, 46) angezeigt wird.

2. Landwirtschaftliche Arbeitsmaschine mit einer Steuer- und Auswerteinheit nach Anspruch 1,
**dadurch gekennzeichnet,**
**dass** das von dem Head-up-Display (30) generierte Bild (37) im Sichtbereich (39) des Betreibers (13) der landwirtschaftlichen Arbeitsmaschine (1) in einer Sichtscheibe (38) der Fahrerkabine (12) angeordnet ist.

3. Landwirtschaftliche Arbeitsmaschine mit einer Steuer- und Auswerteinheit nach einem der vorhergehenden Ansprüche,
**dadurch gekennzeichnet,**
**dass** das von dem Head-up-Display (30) generierte Bild (37) in einem, den visuell zu verfolgenden Arbeitsbereich (42) des Betreibers (13) umfassenden Sichtbereich (39) angeordnet ist.

4. Landwirtschaftliche Arbeitsmaschine mit einer Steuer- und Auswerteinheit nach einem der vorhergehenden Ansprüche,
**dadurch gekennzeichnet,**
**dass** die Position des von dem Head-up-Display (30) generierten Bildes (37) in der Sichtscheibe (39) der Fahrerkabine (12) an die Position des durch den Betreiber (13) der landwirtschaftlichen Arbeitsmaschine (1) visuell zu verfolgenden Arbeitsbereichs (42) anpassbar ist.

5. Landwirtschaftliche Arbeitsmaschine mit einer Steuer- und Auswerteinheit nach einem der vorhergehenden Ansprüche,
**dadurch gekennzeichnet,**
**dass** das von dem Head-up-Display (30) generierte Bild (37) so in die jeweilige Sichtscheibe (38) der Fahrerkabine (12) projiziert wird, dass es als vor der landwirtschaftlichen Arbeitsmaschine (1) liegendes virtuelles Bild (46) wahrgenommen wird.

6. Landwirtschaftliche Arbeitsmaschine mit einer Steuer- und Auswerteinheit nach einem der vorhergehenden Ansprüche,
**dadurch gekennzeichnet,**
**dass** das von dem Head-up-Display (30) generierte Bild (37, 46) globale Informationen (47) und/oder Informationen (48) einer momentan angesteuerten Arbeitsebene (49) umfasst und deren Visualisierung selbsttätig erfolgt.

7. Landwirtschaftliche Arbeitsmaschine mit einer Steuer- und Auswerteinheit nach Anspruch 6,
**dadurch gekennzeichnet,**
**dass** die globalen Informationen (47) Warnhinweise bezüglich kritischer Betriebszustände der landwirtschaftlichen Arbeitsmaschine (1) und Sollwertüberschreitungen (53) und Sollwertunterschreitung (52) von Parametern der landwirtschaftlichen Arbeitsmaschine (1) und des Erntegutes (4, 11) umfassen.

8. Landwirtschaftliche Arbeitsmaschine mit einer Steuer- und Auswerteinheit nach Anspruch 6,
**dadurch gekennzeichnet,**
**dass** die Informationen (48) einer momentan angesteuerten Arbeitsebene (49) die menügeführte Einstellung von Arbeitsorganen (14) der landwirtschaftlichen Arbeitsmaschine (1), die Überwachung von Effizienzkennwerten und die Positionsanzeige der landwirtschaftlichen Arbeitsmaschine (1) umfassen.

9. Landwirtschaftliche Arbeitsmaschine mit einer Steuer- und Auswerteinheit nach einem der vorhergehenden Ansprüche,
**dadurch gekennzeichnet,**
**dass** eine Vielzahl von landwirtschaftlichen Arbeitsmaschinen (1, 2, 54, 55) im Verbund arbeiten und die globalen Informationen (47) und/oder die Informationen (48) einer momentan angesteuerten Arbeitsebene (49) aufeinander bezogene Informationen (56) umfassen.

10. Landwirtschaftliche Arbeitsmaschine mit einer Steuer- und Auswerteinheit nach einem der vorhergehenden Ansprüche,
**dadurch gekennzeichnet,**
**dass** die Positionsortungsvorrichtung als GPS-Ortungsvorrichtung (17) und/oder als Laser- oder Infrarotortungsvorrichtung (20) ausgebildet ist.

11. Landwirtschaftliche Arbeitsmaschine mit einer Steuer- und Auswerteinheit nach einem der vorhergehenden Ansprüche,
**dadurch gekennzeichnet,**
**dass** das Head-up-Display (30) über die Steuer- und Auswerteinheit (16) mit einer GPS-Ortungsvorrichtung (17) gekoppelt ist und die Steuer- und Auswerteinheit (16) die Position der landwirtschaftlichen Arbeitsmaschine (1) mit in dem zu bearbeitenden Territorium vorhandenen Fahrspuren (57, 59) vergleicht und in dem von dem Head-up-Display (30) generierten Bild (37, 46) eine optimierte Einfahrt (58, 60) in die jeweilige Fahrspur (59) angezeigt wird.

12. Landwirtschaftliche Arbeitsmaschine mit einer Steuer- und Auswerteinheit nach einem der vorhergehenden Ansprüche,
**dadurch gekennzeichnet,**
**dass** das Head-up-Display (30) über die Steuer- und Auswerteinheit (16) mit einer GPS-Ortungsvorrichtung (17) gekoppelt ist und die Steuer- und Auswerteinheit (16) die Position der landwirtschaftlichen Arbeitsmaschine (1) mit den Fahrtrouten (62) des Routenplanungssystems (61) vergleicht und in dem von dem Head-up-Display (30) generierten Bild (37, 46) Informationen (58, 60, 62) zur Abarbeitung der Fahrtrouten (62) des Routenplanungssystems (61) angezeigt werden.

13. Landwirtschaftliche Arbeitsmaschine mit einer Steuer- und Auswerteinheit nach einem der vorhergehenden Ansprüche,
**dadurch gekennzeichnet,**
**dass** das Head-up-Display (30) über die Steuer- und Auswerteinheit (16) mit einer Positionsortungsvorrichtung (18) gekoppelt ist, die die Position an der landwirtschaftlichen Arbeitsmaschine (1) adaptierter Anbaugeräte (3) überwacht und wobei in dem von dem Head-up-Display (30) generierten Bild (37, 46) eine Ausrichtmarkierung (63) angezeigt wird, die zur optimierten Ausrichtung des Anbaugerätes (3) von dem Betreiber (13) der landwirtschaftlichen Arbeitsmaschine (1) mit einem Bereich (64, 65) des Anbaugerätes (3) in Übereinstimmung gebracht werden muss.

14. Landwirtschaftliche Arbeitsmaschine mit einer Steuer- und Auswerteinheit nach Anspruch 14,
**dadurch gekennzeichnet,**
**dass** die landwirtschaftliche Arbeitsmaschine (1) als Mähdrescher (2) und das Anbaugerät als Getreideschneidwerk (3) ausgeführt sind.

15. Landwirtschaftliche Arbeitsmaschine mit einer Steuer- und Auswerteinheit nach einem der vorhergehenden Ansprüche,
**dadurch gekennzeichnet,**
**dass** das Head-up-Display (30) über die Steuer- und Auswerteinheit (16) mit einer Laser- oder Infrarotortungsvorrichtung (18) gekoppelt ist, die die Position des an einem Mähdrescher (2) adaptierten Getreideschneidwerks (3) überwacht und wobei in dem von dem Head-up-Display (30) generierten Bild (37, 46) eine Ausrichtmarkierung (63) angezeigt wird, die zur optimierten Ausrichtung des Getreideschneidwerks (3) an einer Bestandskante (19) von dem Betreiber (13) des Mähdreschers (2) mit einem Bereich (64, 65) des Getreideschneidwerks (3) in Übereinstimmung gebracht werden muss.

## Claims

1. An agricultural working machine (1) comprising a control- and evaluation unit (16) which is operatively connected to at least one position location device (17, 20), which acquires the position data (23, 24) of the agricultural working machine and/or position data of the terrain surrounding the agricultural working machine and one or more sensors (25, 27) for generating information signals (26, 29) with regard to the determination of the harvested crop- and/or operating parameters of the agricultural working machine and wherein the agricultural working machine is assigned at least one optical display device (30) for projecting an image into a window pane (38) of the driver's cab, wherein the optical display device is designed as a head-up-display (30) and the control- and evaluation unit generates information signals for the activation of the head-up-display from the position data of the at least one position location device and the information signals of one or several sensors, **characterized in that** in the image (37) generated by the head-up-display two markers (58, 60) are depicted, of which the one marker (58) defines the position of the trip route (61) of a route plan and the other marker (60) the current position of the agricultural working machine and that the respective trip route (62) is also immediately displayed in the image (37, 46).

2. An agricultural working machine comprising a control- and evaluation unit according to claim 1, **characterized in that** the image (37) generated by the head-up-display (30) is arranged in the visual range (39) of the operator (13) of the agricultural working machine (1) in a window pane (38) of the driver's cab (12).

3. An agricultural working machine comprising a control- and evaluation unit according to one of the preceding claims, **characterized in that** the image (37) generated by the head-up-display (30) is arranged in a visual range (39) comprising the work area (42) of the operator (13) to be visually tracked.

4. An agricultural working machine comprising a control- and evaluation unit according to one of the preceding claims, **characterized in that** the position of the Image (37) generated by the head-up-display (30) in the window pane (39) of the driver's cab (12) is adaptable to the position of the work area (42) to be visually tracked by the operator (13) of the agricultural working machine (1).

5. An agricultural working machine comprising a control- and evaluation unit according to one of the preceding claims, **characterized in that** the image (37) generated by the head-up-display (30) is projected into the respective window pane (38) of the driver's cab (12) such that it is perceived as a virtual image (46) lying in front of the agricultural working machine (1).

6. An agricultural working machine comprising a control- and evaluation unit according to one of the preceding claims, **characterized in that** the image (37, 46) generated by the head-up-display (30) comprises global information (47) and/or information (48) of a currently activated working plane (49) and its visualization occurs automatically.

7. An agricultural working machine comprising a control- and evaluation unit according to claim 6, **characterized in that** the global information (47) comprises warnings with regard to critical operating conditions of the agricultural working machine (1) and set value overruns (53) and set value shortfalls (52) of parameters of the agricultural working machine (1) and of the harvested crop (4,11).

8. An agricultural working machine comprising a control- and evaluation unit according to claim 6, **characterized in that** the information (48) of a currently actuated working plane (49) comprises the menu-driven setting of working organs (14) of the agricultural working machine (1), the monitoring of efficiency characteristic values, and the position display of the agricultural working machine (1).

9. An agricultural working machine comprising a control- and evaluation unit according to one of the preceding claims, **characterized in that** a multiplicity of agricultural working machines (1, 2, 54, 55) work in a group and the global information (47) and/or the information (48) of a currently actuated working plane (49) comprises interrelated information (56).

10. An agricultural working machine comprising a control- and evaluation unit according to one of the preceding claims, **characterized in that** the position location device is designed as a GPS-location device (17) and/ or as a laser- or infrared location device (20).

11. An agricultural working machine comprising a control- and evaluation unit according to one of the preceding claims, **characterized in that** the head-up-display (30) is coupled via the control- and evaluation unit (16) with a GPS-location device (17) and the control- and evaluation unit (16) compares the position of the agricultural working machine (1) with the territory of the available lanes (57, 59) to be worked on and in the image (37, 46) generated by the head-up-display (30) an optimized entry (58,60) into the respective lane (59) is displayed.

12. An agricultural working machine comprising a control- and evaluation unit according to one of the preceding claims, **characterized in that** the head-up-display (30) is coupled via the control- and evaluation unit (16) with a GPS-location device (17) and the control- and evaluation unit (16) compares the position of the agricultural working machine (1) with the trip routes (62) of the route planning system (61) and in the image (37, 46) generated by the head-up-display (30) information (58, 60, 62) is displayed for the processing of the trip routes (62) of the route planning system (61).

13. An agricultural working machine comprising a control- and evaluation unit according to one of the preceding claims, **characterized in that** via the control- and evaluation unit (16) the head-up-display (30)is coupled with a position location device (18), which monitors the position of the accessory equipment (3) adapted to the agricultural working machine (1) and wherein in the image (37, 46) generated by the head-up-display (30) an alignment marking (63) is displayed, which must be brought into agreement with an area (64, 65) of the accessory equipment (3) by the operator (13) of the agricultural working machine (1) for the optimized alignment of the accessory equipment (3).

14. An agricultural working machine comprising a control- and evaluation unit according to claim 14, **characterized in that** the agricultural working machine (1) is designed as a combine harvester (2) and the accessory device is designed as a grain cutting unit (3).

15. An agricultural working machine comprising a control- and evaluation unit according to one of the preceding claims, **characterized in that** the head-up-display (30) is coupled via the control- and evaluation unit (16) with a laser- or infrared location device (18), which monitors the position of the grain cutting unit (3) adapted to the combine harvester (2) and wherein in the image (37, 46) generated by the head-up-display (30) an alignment marking (63) is displayed, which must be brought into agreement by the operator (13) of the combine harvester (2) with an area (64, 65) of the grain cutting unit (3) for the optimized alignment of the grain cutting unit (3) to a crop edge (19).

## Revendications

1. Machine de travail agricole (1) comportant une unité de commande et d'analyse (18) qui coopère avec au moins un dispositif de localisation de la position (17, 20), qui détecte les données de position (23, 24) de la machine de travail agricole et/ou les données de position du terrain environnant la machine de travail agricole, et un ou plusieurs capteurs (25, 27) pour générer des signaux d'information (26, 29) relatifs à la détermination de paramètres du produit de récolte et/ou de fonctionnement de la machine de travail agricole, et au moins un dispositif d'affichage optique (30), destiné à projeter une image sur une vitre (38) de la cabine de conduite, étant associé à la machine de travail agricole, ledit dispositif d'affichage optique étant réalisé sous la forme d'un affichage tête haute (30) et l'unité de commande et d'analyse générant, à partir des données de position dudit au moins un dispositif de localisation de la position et/ou à partir des signaux d'information d'un ou de plusieurs capteurs, des signaux d'information destinés à activer l'affichage tête haute, **caractérisée en ce que** deux repères (58, 60) sont représentés sur l'image (37) générée par l'affichage tête haute, parmi lesquels un repère (58) définit la position d'un parcours (61) sur un système de planification des déplacements et l'autre repère (60) définit la position actuelle de la machine de travail agricole, et **en ce que** le parcours (62) respectif est également affiché directement sur l'image (37, 46).

2. Machine de travail agricole comportant une unité de commande et d'analyse selon la revendication 1, **caractérisée en ce que** l'image (37) générée par l'affichage tête haute (30) est située dans le champ de vision (39) du conducteur (13) de la machine de travail agricole (1) sur une vitre (38) de la cabine de conduite (12).

3. Machine de travail agricole comportant une unité de commande et d'analyse selon l'une quelconque des revendications précédentes, **caractérisée en ce que** l'image (37) générée par l'affichage tête haute (30) est située dans un champ de vision (39) contenant la zone de travail (42) à suivre visuellement par le conducteur (13).

4. Machine de travail agricole comportant une unité de commande et d'analyse selon l'une quelconque des revendications précédentes, **caractérisée en ce que** la position de l'image (37) générée par l'affichage tête haute (30) sur la vitre (39) de la cabine de conduite (12) peut être ajustée à la position de la zone de travail (42) que le conducteur (13) de la machine de travail agricole (1) doit suivre visuellement.

5. Machine de travail agricole comportant une unité de commande et d'analyse selon l'une quelconque des revendications précédentes, **caractérisée en ce que** l'image (37) générée par l'affichage tête haute (30) est projetée sur la vitre (38) concernée de la cabine de conduite (12), de telle sorte qu'elle est perçue en tant qu'image virtuelle (46) située devant la machine de travail agricole (1).

6. Machine de travail agricole comportant une unité de commande et d'analyse selon l'une quelconque des revendications précédentes, **caractérisée en ce que** l'image (37, 46) générée par l'affichage tête haute (30) contient des informations globales (47) et/ou des informations (48) relatives à une surface de travail (49) commandée actuellement et la visualisation desdites informations est automatique.

7. Machine de travail agricole comportant une unité de commande et d'analyse selon la revendication 6, **caractérisée en ce que** les informations globales (47) contiennent des avertissements relatifs à des états de fonctionnement critiques de la machine de travail agricole (1) et à des valeurs supérieures (53) ou inférieures (52) aux valeurs de consigne des paramètres de la machine de travail agricole (1) et du produit de récolte (4, 11).

8. Machine de travail agricole comportant une unité de commande et d'analyse selon la revendication 6, **caractérisée en ce que** les informations (48) relatives à une surface de travail (49) commandée actuellement contiennent le réglage assisté par menu des organes de travail (14) de la machine de travail agricole (1), le contrôle des caractéristiques d'efficacité et l'affichage de la position de la machine de travail agricole (1).

9. Machine de travail agricole comportant une unité de commande et d'analyse selon l'une quelconque des revendications précédentes, **caractérisée en ce qu'**une pluralité de machines de travail agricoles (1, 2, 54, 55) travaillent en association et **en ce que** les informations globales (47) et/ou les informations (48) relatives à une surface de travail (49) commandée actuellement contiennent des informations en relation réciproque (56).

10. Machine de travail agricole comportant une unité de commande et d'analyse selon l'une quelconque des revendications précédentes, **caractérisée en ce que** le dispositif de localisation de la position est réalisé sous la forme d'un dispositif de localisation GPS (17) et/ou sous la forme d'un dispositif de localisation à laser ou infrarouge (20).

11. Machine de travail agricole comportant une unité de commande et d'analyse selon l'une quelconque des revendications précédentes, **caractérisée en ce que** l'affichage tête haute (30) est couplé, via l'unité de commande et d'analyse (16), à un dispositif de localisation GPS (17), et l'unité de commande et d'analyse (16) compare la position de la machine de travail agricole (1) à des voies de roulement (57, 59) présentes dans le territoire à traiter, et sur l'image (37, 46) générée par l'affichage tête haute (30) est affichée une entrée (58, 60) optimisée dans la voie de roulement (59) respective.

12. Machine de travail agricole comportant une unité de commande et d'analyse selon l'une quelconque des revendications précédentes, **caractérisée en ce que** l'affichage tête haute (30) peut être couplé à un dispositif de localisation GPS (17) via l'unité de commande et d'analyse (16), et l'unité de commande et d'analyse (16) compare la position de la machine de travail agricole (1) avec les parcours (62) du système de planification des déplacements (61), et sur l'image (37, 46) générée par l'affichage tête haute (30) sont affichées des informations (58, 60, 62) permettant d'exécuter les parcours (62) du système de planification des déplacements (61).

13. Machine de travail agricole comportant une unité de commande et d'analyse selon l'une quelconque des revendications précédentes, **caractérisée en ce que** l'affichage tête haute (30) est couplé, via l'unité de commande et d'analyse (16), à un dispositif de localisation de la position (18) qui contrôle la position des outils portés (3) attelés à la machine de travail agricole (1), et sur l'image (37, 46) générée par l'affichage tête haute (30) étant affiché un repère d'alignement (63) qui, pour l'alignement optimisé de l'outil porté (3), doit être amené par le conducteur (13) de la machine de travail agricole (1) en concordance avec une zone (64, 65) de l'outil porté (3).

14. Machine de travail agricole comportant une unité de commande et d'analyse selon la revendication 14, **caractérisée en ce que** la machine de travail agricole (1) est réalisée sous la forme d'une moissonneuse-batteuse (2) et l'outil porté est réalisé sous la forme d'une barre de coupe de céréales (3).

15. Machine de travail agricole comportant une unité de commande et d'analyse selon l'une quelconque des revendications précédentes, **caractérisée en ce que** l'affichage tête haute (30) est couplé, via l'unité de commande et d'analyse (16), à un dispositif de localisation à laser ou infrarouge (18) qui contrôle la position de la barre de coupe de céréales (3) attelée à une moissonneuse-batteuse (2), et sur l'image (37, 46) générée par l'affichage tête haute (30) est affiché un repère d'alignement (63) qui, pour l'alignement optimisé de la barre de coupe de céréales (3) sur un bord de la récolte (19), doit être amené par le conducteur (13) de la moissonneuse-batteuse (2) en concordance avec une zone (64, 65) de la barre de coupe de céréales (3).
